# EUROPEAN PATENT APPLICATION

(11) **EP 4 647 938 A1**
(43) Date of publication of application: **12.11.2025**
(21) Application number: 25155311.1
(22) Date of filing: 31.01.2025
(51) Int. Cl.: G06F 16/334, G06F 40/205

(54) **SYSTEM AND METHOD FOR ANALYZING SENTENCE**

(30) Priority: 08.05.2024 KR 20240060264; 26.07.2024 KR 20240099084; 31.07.2024 KR 20240101468; 31.07.2024 KR 20240101469
(71) Applicant: Ajou University Industry-Academic Cooperation Foundation, Suwon-si, Gyeonggi-do (KR)
(72) Inventor: KOO, Hyungil, Suwon-si, Gyeonggi-do (KR); KANG, Minjun, Suwon-si, Gyeonggi-do (KR); PARK, Sanghyun, Suwon-si, Gyeonggi-do (KR)
(74) Representative: Jung, Minkyu

(57) **Abstract**

A system includes: a communication interface connected to another computing device and receiving an input related to information about a grammar to be searched; and at least one processor configured to obtain a query including information about the grammar to be searched based on the received input, compare grammar structure information corresponding to the grammar included in the obtained query with sentence structure information of each sentence stored in a database, and obtain a search result including at least one sentence having the grammar structure information according to a comparison result, wherein the grammar structure information and the sentence structure information include structure information based on dependency parsing.

## Description

### BACKGROUND

### 1. Field

One or more embodiments relate to a method and system for analyzing a sentence.

Example embodiments of the present disclosure relate to two national research and development projects. Information on one national research and development project has subject identification No. 1711197986, subject No. RS-2023-00255968, project name "Artificial Intelligence Convergence Innovation Talent Training (Ministry of Science and ICT)", and subject title "Artificial Intelligence Convergence Innovation Talent Training (Ajou University)". Information on the other national research and development project has subject identification No. 1711193301, subject No. IITP-2024-2020-0-01461, project name "University ICT Research Center Support Project", and subject title "Development of intelligent medical imaging diagnostic solutions".

### 2. Description of the Related Art

Natural language processing technology is greatly increasing in importance in modern society. In particular, analysis technology for complex sentences is one of the core elements of natural language processing and is utilized in various fields. As detailed technologies related to this sentence analysis technology, there are sentence search technology, modification relation analysis technology, and sentence segmentation technology.

First, the sentence search technology is a technology that searches and provides sentences most relevant to a user's query from a large-scale text database, and is utilized in various fields such as language education, query response, legal document search, and academic paper search.

Most of the existing sentence search technologies compare and search sentences based on words such as similarity of words included in the sentence or part of speech information, and cannot consider a grammatical meaning or structure of the sentence. In other words, according to the existing technologies, sentence search based on structural or grammatical similarity of sentences is not provided, so there are limitations when applying the existing technologies to each field in reality.

The modification relation analysis technology is mainly used in the fields of machine translation, document interpretation/summary, information retrieval, query response, and language education. In particular, in the field of language education, the modification relation analysis technology allows learners to easily understand complex sentence structures visually, and easily find and correct grammatical errors in learners' writings, etc., thereby enabling effective language learning.

Conventional modification relation analysis technologies display a modification relation centered on a main word from the beginning of a sentence, so in sentences with complex modification relations, modifiers or prepositional phrases in the back may not be accurately analyzed.

The sentence segmentation technology may be an important process in accurately understanding and interpreting the meaning of sentences not only in language learning but also in the field of natural language processing (NLP). Constituency parsing (phrase structure parsing or syntactic component parsing) is mainly used for this sentence segmentation. Constituency parsing is a method of analyzing a grammatical structure of a sentence, decomposing the sentence into its constituent elements, and expressing a hierarchical relation between them. In the past, constituency parsing mainly used rule-based and statistical approaches, but the rule-based approach has limitations in processing new sentence structures because it is difficult to comprehensively write rules, and the statistical approach takes too much time to process complex sentence structures.

Furthermore, in an identical sentence, a segmentation position needs to be different depending on a user's segmentation purpose or important factors (words, etc.) considered in the sentence. However, according to conventional technologies, segmentation results of an identical sentence may be uniform, which may not meet the user's needs.

### SUMMARY

One or more embodiments include a method capable of providing search results for similar sentences, sentence modification relations, and appropriate sentence segmentation results through sentence structure analysis.

One or more embodiments include a method capable of accurately searching and providing sentences that include grammar input by users.

One or more embodiments include a method capable of analyzing and providing accurate modification relations for sentences to learners, etc.

One or more embodiments include a method capable of providing various types of sentence segmentation results according to segmentation conditions set by users, etc. for sentences.

Additional aspects will be set forth in part in the description which follows and, in part, will be apparent from the description, or may be learned by practice of the presented embodiments of the disclosure.

According to an aspect of an embodiment, a system comprising: a communication interface connected to another computing device and receiving an input related to information about a grammar to be searched; and at least one processor configured to: obtain a query including information about the grammar to be searched based on the received input; compare grammar structure information corresponding to the grammar included in the obtained query with sentence structure information of each sentence stored in a database; and obtain a search result including at least one sentence having the grammar structure information according to a comparison result, and the grammar structure information and the sentence structure information comprise structure information based on dependency parsing.

According to an exemplary embodiment, the at least one processor is configured to: provide a first interface for selecting one of a plurality of preset grammars to the other computing device through the communication unit; and receive an input for selecting one of the plurality of grammars through the communication unit based on the first interface.

According to an exemplary embodiment, the at least one processor is configured to: obtain grammar structure information through dependency parsing for the selected grammar; or obtain grammar structure information corresponding to the selected grammar from grammar structure information corresponding to each of the plurality of grammars stored in a database or memory.

According to an exemplary embodiment, the at least one processor is configured to: provide a second interface for inputting grammar structure information corresponding to the grammar to be searched to the other computing device through the communication unit; and receive the grammar structure information through the communication unit based on the second interface.

According to an exemplary embodiment, the grammar structure information comprises a dependency tree corresponding to a dependency parsing result, and the at least one processor receives the grammar structure information including a value of each of a plurality of nodes constituting the dependency tree, and a value of each of at least one edge connecting two different nodes from among the plurality of nodes through the second interface.

According to an exemplary embodiment, the at least one processor is configured to: analyze whether the sentence structure information of each of the sentences stored in the database comprises a same structure as that of grammar structure information corresponding to the grammar to be searched; and obtain the comparison result including pair data of at least one sentence-sentence structure information analyzed as including a same structure as that of the grammar structure information.

According to an exemplary embodiment, the at least one processor is configured to: analyze whether the sentence structure information of each of the sentences comprises the same structure as that of the grammar structure information corresponding to the grammar to be searched based on an identity of respective words or parts of speech of nodes included in the grammar structure information, an identity of edges between the nodes, and an identity of respective dependency relation tags corresponding to the edges.

According to an aspect of an embodiment, a system comprising: a communication interface receiving a sentence corresponding to a modification relation analysis target from another computing device connected thereto through a network; and at least one processor configured to: obtain sentence structure information through dependency parsing of the received sentence, wherein the sentence structure information comprises nodes corresponding to words included in the sentence and edges connecting two nodes having a dependency relation from among the plurality of nodes; set a search priority for searching a modification relation for each of the nodes included in the sentence structure information based on the obtained sentence structure information; search the modification relation based on the set search priority; and provide a modification relation analysis result for the sentence based on a search result.

According to an exemplary embodiment, the at least one processor is configured to: measure a depth of each of the nodes included in the sentence structure information; and set a search priority for each of the nodes based on the measured depth.

According to an exemplary embodiment, the at least one processor is configured to: detect at least one edge having a dependency relation tag corresponding to a modification relation based on a dependency relation tag of each edge included in the sentence structure information, thereby searching the modification relation.

According to an exemplary embodiment, the at least one processor is configured to: determine, for each of the detected at least one edge, a word, phrase or word phrase corresponding to at least one node located below the edge as a modifier, a modifier phrase or a modifier clause; determine an upper node connected to the edge as a modified word; and generate at least one modification relation candidate including the modifier, modifier phrase or modifier clause, and the modified word for the edge.

According to an exemplary embodiment, the at least one processor is configured to: provide the modification relation analysis result indicating the at least one modification relation candidate on the sentence.

According to an exemplary embodiment, the at least one processor is configured to: provide the modification relation analysis result indicating a first modification relation candidate from among the at least one modification relation candidates on the sentence; receive, from the other computing device, a request for outputting a previous modification relation candidate of the first modification relation candidate; and in response to the request for outputting the previous modification relation candidate, provide a second modification relation candidate having a modified word located at a lower node than a modified word of the first modification relation candidate by displaying the second modification relation candidate in the modification relation analysis result.

According to an exemplary embodiment, the at least one processor is configured to: receive, from the other computing device, a request for outputting a next modification relation candidate of the first modification relation candidate; and in response to the request for outputting the next modification relation candidate, provide a third modification relation candidate having a modified word located at a higher node than the modified word of the first modification relation candidate by displaying the third modification relation candidate in the modification relation analysis result.

According to an aspect of an embodiment, a system comprising: a communication interface receiving a sentence corresponding to a segmentation target from another computing device connected thereto through a network; and at least one processor configured to: obtain sentence structure information through constituency parsing of the received sentence, wherein the sentence structure information expresses a hierarchical relation between constituents of the sentence, and comprises a plurality of nodes each of which has a constituency tag set to represent a grammatical constituent; set a weight to each of the plurality of nodes based on the constituency tag set to each of the plurality of nodes; generate at least one segmentation position candidate for the sentence based on the set weight; and generate a sentence segmentation result based on the generated at least one segmentation position candidate.

According to an exemplary embodiment, the at least one processor is configured to: respectively set weights to the plurality of nodes based on weight information for each constituency tag that is preset, and at least some of respective weights for constituency tags included in the weight information for each constituency tag are changeable based on weight adjustment information received through the other computing device.

According to an exemplary embodiment, the at least one processor is configured to: apply the weights respectively set to the plurality of nodes to a left blank area of a first word included in a corresponding node and a right blank area of a last word, respectively; sum at least one of the applied weights for each of the blank areas; and generate the at least one segmentation position candidate including at least one blank area from among blank areas included in the sentence based on the summed weights.

According to an exemplary embodiment, the at least one processor is configured to: set respective segmentation priorities for the blank areas based on the summed weights; and generate the at least one segmentation position candidate based on the set segmentation priorities and a number of segmentations.

According to an exemplary embodiment, the at least one processor is configured to: set the segmentation priorities in order of highest summed weights; and ignore a weight for a left blank area of a first word in the sentence and a weight for a right blank area of a last word in the sentence.

According to an exemplary embodiment, the at least one processor is configured to: sequentially decrease weights for adjacent blank areas on both sides to 0 or a preset value, starting from a blank area having a highest segmentation priority.

### BRIEF DESCRIPTION OF THE DRAWINGS

Embodiments of the disclosure will be more clearly understood from the following detailed description taken in conjunction with the accompanying drawings in which:
FIG. 1 is a view for a conceptual explanation of a sentence search system as an example of a sentence analysis system according to an embodiment;
FIG. 2 is a view showing the configuration of a sentence search system according to an embodiment;
FIG. 3 is an exemplary view for explaining the operation of a dependency parsing unit illustrated in FIG. 2;
FIG. 4 is an exemplary view for explaining the operation of a grammar input unit and a grammar structure information generation unit illustrated in FIG. 2;
FIGS. 5 and 6 are exemplary views for explaining the operation of a structure comparison unit and a search result output unit illustrated in FIG. 2;
FIG. 7 is a flowchart for explaining a sentence search method as an example of a sentence analysis method according to an embodiment;
FIG. 8 is a view for a conceptual explanation of a modification relation analysis system as an example of a sentence analysis system according to an embodiment;
FIG. 9 is a view showing the configuration of a modification relation analysis system according to an embodiment;
FIG. 10 is a block diagram showing a configuration example of a modification relation analysis unit illustrating in FIG. 9;
FIGS. 11 to 13 are exemplary views for explaining the operation of the modification relation analysis unit according to the configuration example of FIG. 10;
FIG. 14 is an exemplary view for explaining the operation of a modification relation output unit illustrating in FIG. 9;
FIG. 15 is a flowchart for explaining a modification relation analysis method as an example of a sentence analysis method according to an embodiment;
FIG. 16 is a view for a conceptual explanation of a sentence segmentation system as an example of a sentence analysis system according to an embodiment;
FIG. 17 is a view showing the configuration of a sentence segmentation system according to an embodiment;
FIG. 18 is a view showing constituency tags set by a constituency parsing unit;
FIG. 19 is an exemplary view for explaining the operation of a constituency parsing unit illustrated in FIG. 17;
FIG. 20 is a block diagram showing a configuration example of a sentence segmentation unit illustrated in FIG. 17;
FIGS. 21 to 23 are exemplary views for explaining the operation of a sentence segmentation unit according to the configuration example of FIG. 20;
FIG. 24 is an exemplary view for explaining the operation of a segmentation result providing unit illustrated in FIG. 19;
FIG. 25 is a flowchart for explaining a sentence segmentation method as an example of a sentence analysis method according to an embodiment; and
FIG. 26 is a schematic hardware configuration block diagram of a computing device configuring a sentence search system according to an embodiment.

### DETAILED DESCRIPTION

Embodiments according to the inventive concept are provided to more completely explain the inventive concept to one of ordinary skill in the art, and the following embodiments may be modified in various other forms and the scope of the inventive concept is not limited to the following embodiments. Rather, these embodiments are provided so that the disclosure will be thorough and complete, and will fully convey the scope of the inventive concept to one of ordinary skill in the art.

It will be understood that, although the terms first, second, etc. may be used herein to describe various members, regions, layers, sections, and/or components, these members, regions, layers, sections, and/or components should not be limited by these terms. These terms do not denote any order, quantity, or importance, but rather are only used to distinguish one component, region, layer, and/or section from another component, region, layer, and/or section. Thus, a first member, component, region, layer, or section discussed below could be termed a second member, component, region, layer, or section without departing from the teachings of embodiments. For example, as long as within the scope of this disclosure, a first component may be named as a second component, and a second component may be named as a first component.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When a certain embodiment may be implemented differently, a specific process order may be performed differently from the described order. For example, two consecutively described processes may be performed substantially at the same time or performed in an order opposite to the described order.

The terms "unit", "device", "~er (~or)", "module", etc., refer to a processing unit of at least one function or operation, which may be implemented by hardware such as a processor, a microprocessor, an application processor, a micro controller, a central processing unit (CPU), an application processor (AP), a graphics processing unit (GPU), an accelerate processor unit (APU), a digital signal processor (DSP), an application specific integrated circuit (ASIC), a field programmable gate array (FPGA), a neural processing unit (NPU), a neuromorphic processor, etc., software, or a combination of hardware and software, and may be implemented in a form combined with a memory that stores data necessary for processing at least one function or operation.

Throughout the specification, components may be discriminated by their major functions. For example, two or more components as herein used may be combined into one, or a single component may be subdivided into two or more sub-components according to subdivided functions. Each of the components may perform its major function and further perform part or all of a function served by another component. In this way, part of a major function served by each component may be dedicated and performed by another component.

As used herein, the term "and/or" includes any and all combinations of one or more of the associated listed items.

Hereinafter, embodiments of the inventive concept will be described in detail with reference to the accompanying drawings.

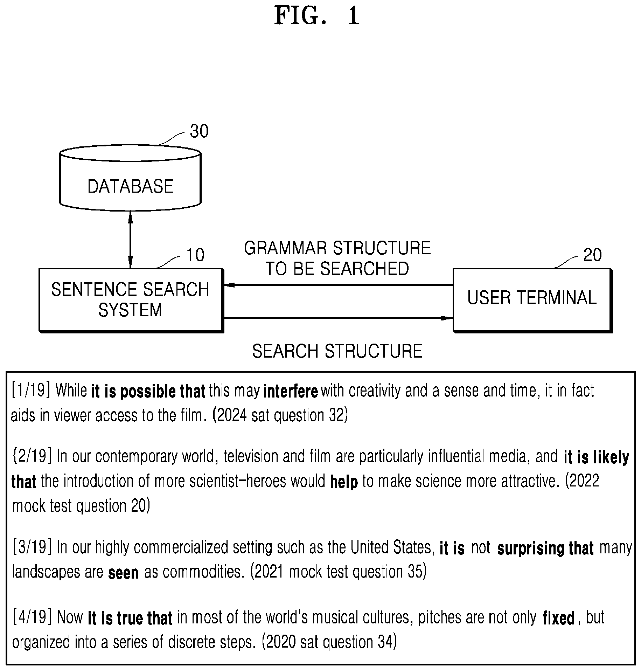

FIG. 1 is a view for a conceptual explanation of a sentence search system as an example of a sentence analysis system according to an embodiment.

Referring to FIG. 1, a sentence search system 10 may receive a search request for a sentence having a specific grammar structure (format) through a user terminal 20, etc., and in response to the received search request, extract at least one sentence having the specific grammar structure from among sentences stored in a database 30 and provide it as a search result. That is, the sentence search system 10 may be applied to various fields such as language education, grammatical error check, and interpretation of complex sentences by providing a grammar structure-based similar sentence search method, unlike the existing word-based similar sentence search method.

The sentence search system 10 may be configured to include at least one computing device. For example, each of the at least one computing device may include a hardware-based device including a processor, memory, a communication unit, an input unit, and/or an output unit. In this case, components (modules) included in the sentence search system 10 may be implemented as hardware, software, or a combination thereof, and may be implemented by being integrated or segmented into the at least one computing device. In addition, the components (modules) included in the sentence search system 10 may be implemented as a computer-readable storage medium storing at least one program including instructions for performing the dependency parsing method and/or sentence search method described below.

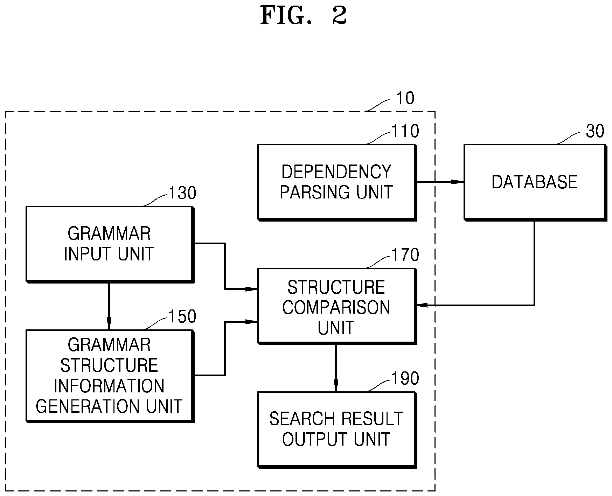

Hereinafter, various embodiments related to a sentence search method of the sentence search system 10 will be specifically described with reference to FIGS. 2 to 7.

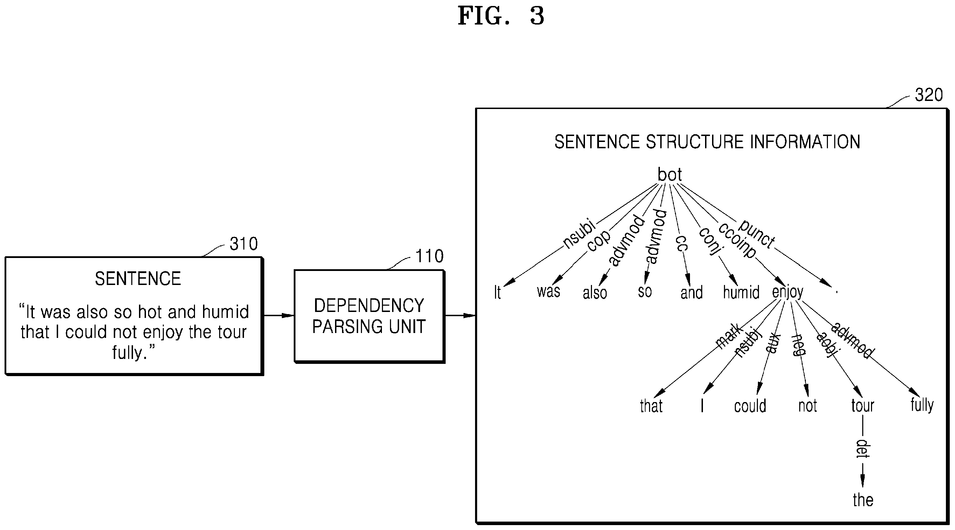

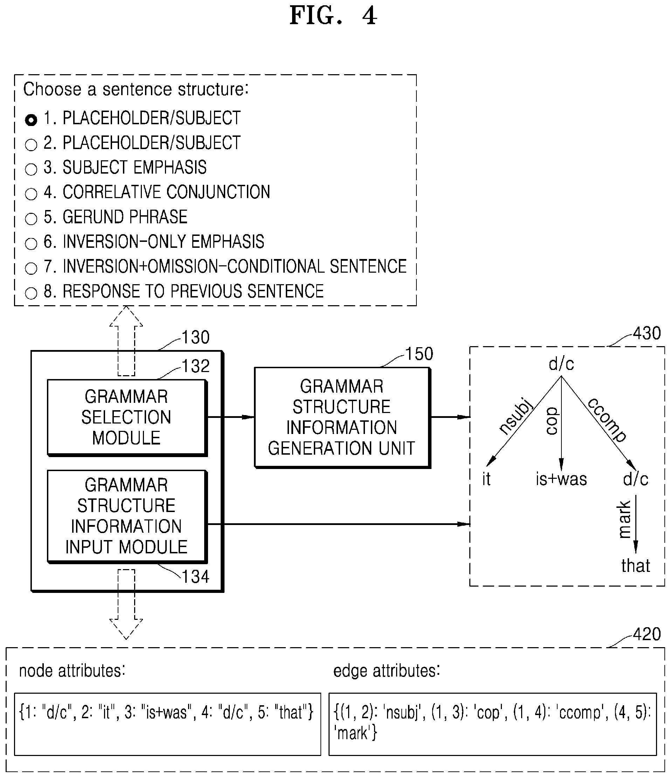

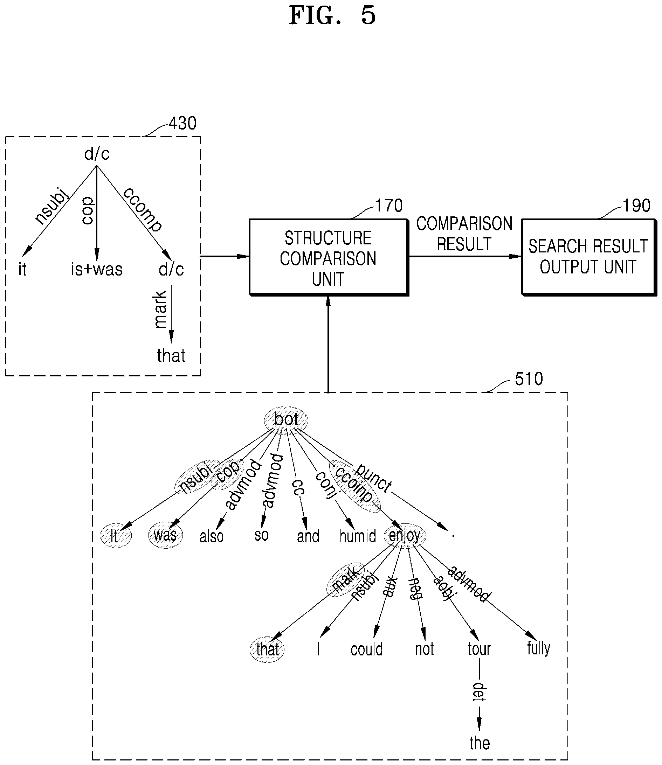

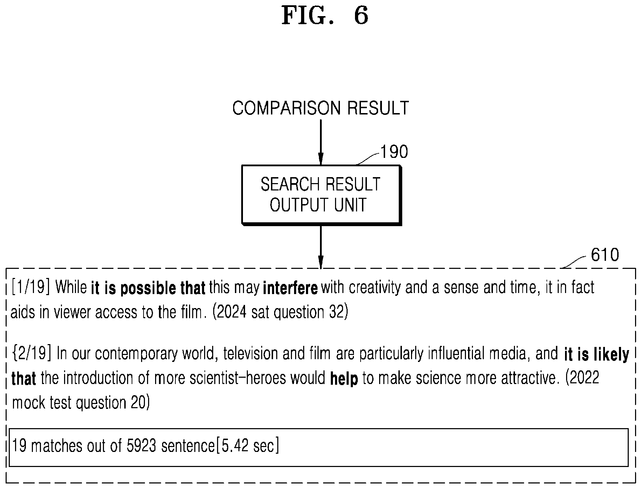

FIG. 2 is a view showing the configuration of a sentence search system according to an embodiment. FIG. 3 is an exemplary view for explaining the operation of a dependency parsing unit illustrated in FIG. 2. FIG. 4 is an exemplary view for explaining the operation of a grammar input unit and a grammar structure information generation unit illustrated in FIG. 2. FIGS. 5 and 6 are exemplary views for explaining the operation of a structure comparison unit and a search result output unit illustrated in FIG. 2.

Referring to FIG. 2, the sentence search system 10 may include a dependency parsing unit 110, a grammar input unit 130, a grammar structure information generation unit 150, a structure comparison unit 170, and a search result output unit 190.

When a sentence to be stored in a database 30 is input, the dependency parsing unit 110 may perform dependency parsing on the input sentence to obtain sentence structure information. The obtained sentence structure information may be paired with the input sentence and stored in the database 30.

Dependency parsing is a technique for identifying the structure of a sentence by analyzing a dependency relation between words in a sentence, and may identify which words each word depends on and what grammatical relation each word has.

When dependency parsing is performed, the central element in the sentence becomes a governor, and the element that complements the meaning of the governor may be classified as a dependent. In addition, when two words in a sentence are in a dependency relation, the relationship between the two words may be expressed according to a dependency relation tag. Table 1 below discloses dependency relation tags and their corresponding dependencies.

**[Table 1]**

| | | | | | |
|---|---|---|---|---|---|
| acomp | adjectival complement | dobj | direct object | pcomp | prepositional complement |
| advcl | adverbial clause | expl | 'there' expletive | pobj | prepositional object |
| advmod | adverbial modifier | infmod | infinite modifier | poss | possessive |
| amod | adjectival modifier | iobj | indirect object | possessive | possessive marker |
| appos | appositive | mark | subordinate clause marker | preconj | pre conjunct |
| aux | auxiliary | mwe | multi-word expression | predet | predeterminer |
| auxpass | auxiliary (passive) | neg | negative | prep | preposition |
| cc | coordination | nn | noun compound | pit | particle |
| ccomp | clausal complement | npadvmod | noun phrase as adverbial modi fier | punct | punctuation |
| conj | conjunction | nsubj | nominal subject | quantmod | quantifier modifier |
| cop | copula complement | nsubjpass | nominal subject (passive) | rcmod | relative clause |
| csubj | clausal subject | num | numeric modifier | tmod | temporal modifier |
| dep | unable to determine | number | compound number | xcomp | clausal complement w/o subj |
| det | determiner | parataxis | parataxis | | |
| discourse | discourse element | partmod | participle modifier | | |

Referring to the exemplary view of FIG. 3, sentence structure information 320 obtained by the dependency parsing unit 110 according to a result of performing dependency parsing on an input sentence 310 may be expressed in the form of a dependency tree. In the dependency tree, each node may correspond to a word in a sentence, and an edge may represent a dependency relation between words. However, the sentence structure information 320 is not limited to a tree form, and may have various forms representing a dependency relation of the sentence.

The dependency parsing unit 110 may perform dependency parsing on the input sentence 310 through various methods such as a rule-based analysis method or a neural network-based analysis method to obtain the sentence structure information 320. The rule-based analysis method may refer to a method of manually defining grammar rules and searching and analyzing grammar rules included in the input sentence 310. The neural network-based analysis method may refer to a method of obtaining the sentence structure information 320 from the input sentence 310 using a deep learning model.

To explain an example of the neural network-based analysis method in more detail, the dependency parsing unit 110 may tokenize each word included in the input sentence 310 and input each tokenized word into a deep learning model to obtain dependency relation information between words. The dependency parsing unit 110 may generate the sentence structure information 320 (tree form, etc.) corresponding to the obtained dependency relation information and store it in the database 30.

Referring again to FIG. 2, the grammar input unit 130 may obtain information about the grammar to be searched from the user terminal 20 connected to the sentence search system 10. For example, the grammar input unit 130 may provide an interface (screen, etc.) for receiving information about the grammar to be searched to the user terminal 20. The information about the grammar to be searched above may be received from a system (server, etc.) that provides various language analysis/processing related services (information retrieval, query response, document interpretation, etc.) in addition to the user terminal 20.

Referring to an embodiment of FIG. 4, the grammar input unit 130 may include a grammar selection module 132 and a grammar structure information input module 134.

The grammar selection module 132 may provide a first interface 410 that induces a user, etc. to select one of preset grammars.

On the other hand, the grammar structure information input module 134 may provide a second interface 420 that allows a user, etc. to directly input grammar structure information corresponding to the grammar to be searched. For example, the grammar structure information input module 134 may obtain a query including the grammar structure information by receiving grammar structure information including values (word, part of speech, dependency tag, d/c (all words or all dependencies), etc.) for each node and edge of a dependency tree from a user, etc. through the second interface 420.

The grammar structure information generation unit 150 may obtain a query including grammar structure information by generating grammar structure information 430 corresponding to a selected grammar when information about the grammar to be searched is obtained through the grammar selection module 132.

For example, grammar structure information for each of the above preset grammars may be stored in a database 30 or memory (not shown), and in this case, the grammar structure information generation unit 150 may obtain grammar structure information 430 corresponding to a selected grammar from the database 30 or memory.

Alternatively, the grammar structure information generation unit 150 may directly generate the grammar structure information 430 corresponding to the selected grammar. In this case, the grammar structure information generation unit 150 may obtain the grammar structure information 430 corresponding to the selected grammar through various methods such as a rule-based analysis method or a neural network-based analysis method, and because the above methods are similar to the methods described above in the dependency parsing unit 110, a redundant description thereof will not be given herein.

Referring again to FIG. 2, the structure comparison unit 170 may compare the grammar structure information obtained through the grammar input unit 130 or the grammar structure information generation unit 150 with sentence structure information of each sentence stored in the database 30 and provide a result of the comparing to the search result output unit 190.

Referring to the exemplary view of FIG. 5, the structure comparison unit 170 may analyze whether sentence structure information 510 of each sentence stored in the database 30 includes the same structure as that of the grammar structure information 430 corresponding to the grammar to be searched. In more detail, the structure comparison unit 170 may analyze whether the sentence structure information 510 includes the same structure as that of the grammar structure information 430 based on the identity of respective words or parts of speech of nodes included in the grammar structure information 430, the identity of connection relationships (edges) between the nodes, and the identity of respective dependency relation tags corresponding to the edges.

The result of the comparing may include pair data (pair data of sentence-sentence structure information) of a sentence analyzed as including the same structure as that the grammar structure information 430 and sentence structure information of the sentence. According to an embodiment, when there is no sentence in the database 30 that includes the same structure as that the grammar structure information 430, the result of the comparing may include a value indicating that there is no searched sentence.

Referring back to FIG. 2, the search result output unit 190 may generate a search result based on the result of comparing provided from the structure comparison unit 170, and transmit the generated search result to the user terminal 20, etc., or may output the generated search result through an output unit (a display, etc.) included in the sentence search system 10.

Referring also to FIG. 6, the search result output unit 190 may generate a search result 610 including at least one searched sentence, the source of each sentence, the number of searched sentences, the search time, etc. based on the received result of comparing. In addition, the search result output unit 190 may also generate the search result 610 based on sentence structure information corresponding to at least one searched sentence, so as to display (color, bold, size, font, etc.) words corresponding to the grammar structure information in the sentence separately from other words.

Referring back to FIG. 2, the database 30 may store multiple pair data consisting of sentences and sentence structure information obtained according to a dependency parsing result for the sentences. In this specification, the database 30 is illustrated as being implemented as a separate configuration connected to the sentence search system 10, but according to an embodiment, the database 30 may be implemented in a form that is included in the sentence search system 10 in this specification.

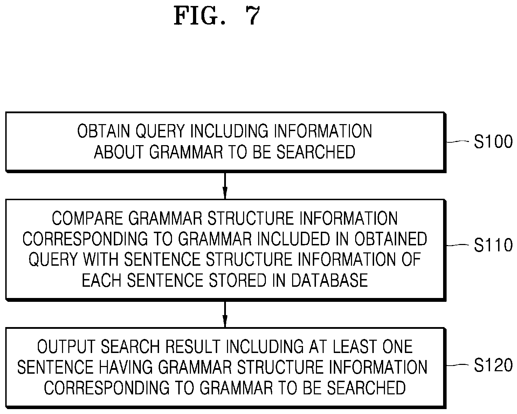

FIG. 7 is a flowchart for explaining a sentence search method as an example of a sentence analysis method according to an embodiment.

Referring to FIG. 7, the sentence search method according to an embodiment may include operation S100 of obtaining a query including information about a grammar to be searched, and operation S110 of comparing grammar structure information corresponding to the grammar included in the obtained query with sentence structure information of each sentence stored in the database 30.

As described above, the sentence search system 10 may obtain the query including information about the grammar to be searched by obtaining grammar structure information corresponding to a grammar selected through the user terminal 20, etc. from among preset grammars or obtaining grammar structure information directly input from the user terminal 20, etc.

The sentence search system 10 may compare whether the grammar structure information included in the obtained query is included in the sentence structure information of each sentence stored in the database 30, and generate at least one sentence determined to include the grammar structure information as a comparison result.

The sentence search method may include operation S120 of outputting a search result including at least one sentence having grammar structure information corresponding to the grammar to be searched based on the comparison result.

The sentence search system 10 may generate a search result including the at least one sentence, the source of each sentence, the number of searched sentences, the search time, etc. The generated search result may be transmitted to the user terminal 20, etc., or may be output through the output unit (display, etc.) of the sentence search system 10.

The sentence search system 10 and the sentence search method according to an embodiment may be applied to various fields such as language education content, sentence interpretation/analysis service, etc. When the sentence search system and the sentence search method are provided to language education content, a content creator may easily obtain various grammar examples by using the sentence search system and the sentence search method and may develop effective educational materials by utilizing the obtained grammar examples. In addition, because a learner may quickly and easily search and learn examples of the desired grammar, language learning may be performed more efficiently.

Furthermore, the embodiment is not limited to a specific language and may be applied to various languages, so the embodiment may be effectively applied to various languages depending on a language type of a sentence built in the database 30.

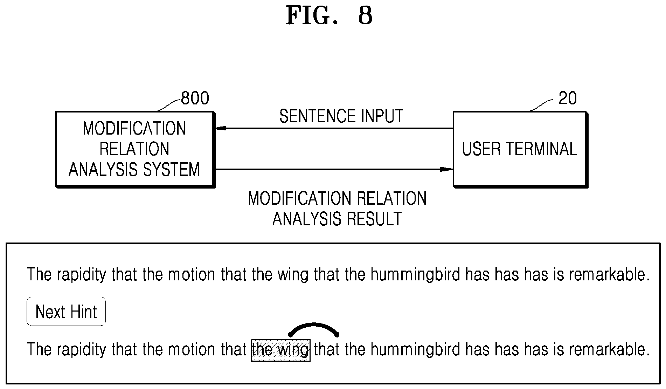

FIG. 8 is a view for a conceptual explanation of a modification relation analysis system as an example of a sentence analysis system according to an embodiment.

Referring to FIG. 8, a modification relation analysis system 800 may receive a sentence corresponding to a modification relation analysis target, perform modification relation analysis based on dependency parsing on the received sentence, and then provide a result of the analysis. FIG. 8 illustrates a form of receiving a sentence corresponding to a modification relation analysis target from the user terminal 20 including a smart phone, a tablet PC, a desktop PC, a laptop PC, etc., but depending on the embodiment, the sentence may be received from a system (machine translation, query response, document interpretation/summary, sentiment analysis, information retrieval, etc.) providing a language analysis/processing related service or an artificial intelligence-based language analysis/processing related model. Alternatively, the modification relation analysis system 800 may be included as a component of a system providing the language analysis/processing related service.

The modification relation analysis system 800 may be configured to include at least one computing device, similar to the sentence search system 10 described above. In this case, components (modules) included in the modification relation analysis system 800 may be implemented as hardware, software, or a combination thereof, and may be implemented by being integrated or segmented into the at least one computing device. In addition, the components (modules) included in the modification relation analysis system 800 may be implemented as a computer-readable storage medium storing at least one program including instructions for performing the dependency parsing method and/or modification relation analysis method described below.

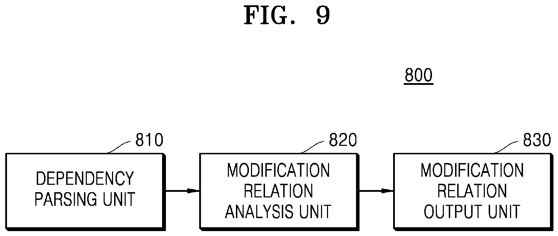

Hereinafter, various embodiments related to an operation of the modification relation analysis system 800 will be specifically described with reference to FIGS. 9 to 15.

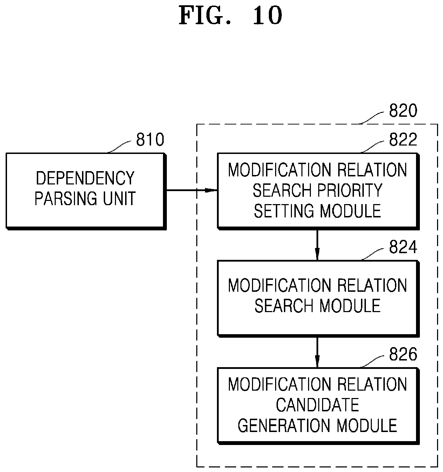

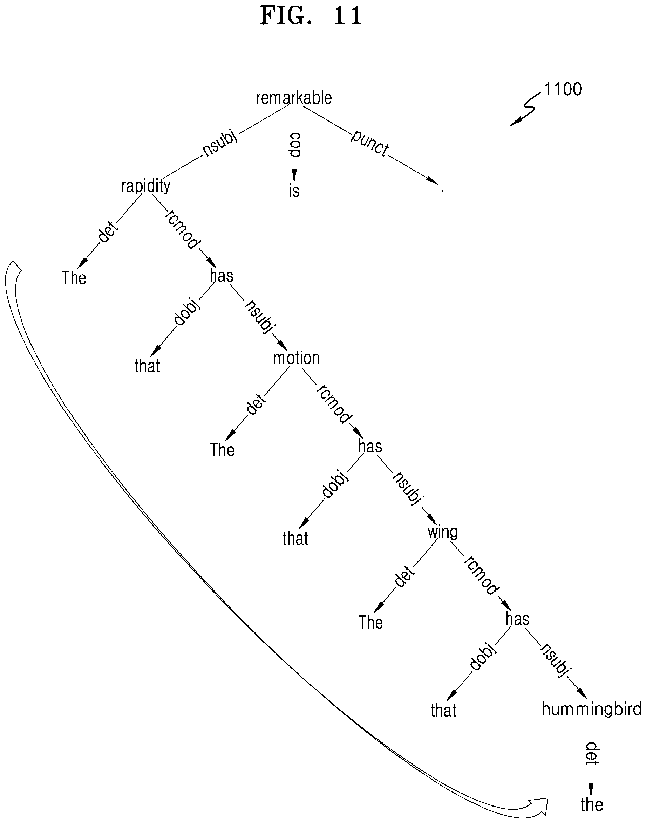

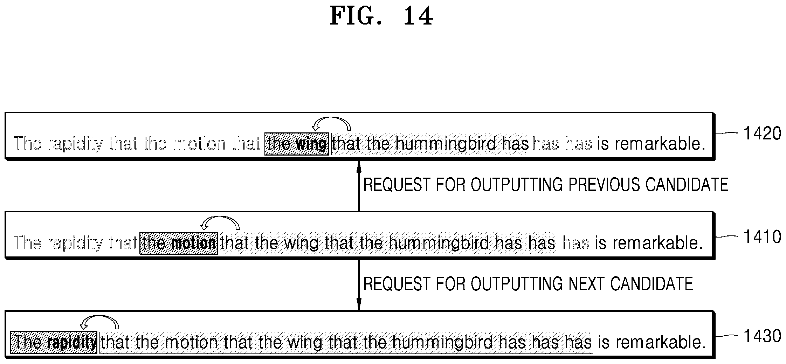

FIG. 9 is a view showing the configuration of a modification relation analysis system according to an embodiment. FIG. 10 is a block diagram showing a configuration example of a modification relation analysis unit illustrating in FIG. 9. FIGS. 11 to 13 are exemplary views for explaining the operation of the modification relation analysis unit according to the configuration example of FIG. 10. FIG. 14 is an exemplary view for explaining the operation of a modification relation output unit illustrating in FIG. 9.

Referring to FIG. 9, the modification relation analysis system 800 may include a dependency parsing unit 810, a modification relation analysis unit 820, and a modification relation output unit 830.

The dependency parsing unit 810 has substantially the same configuration as that of the dependency parsing unit 110 described above in FIGS. 2 and 3, and thus, a duplicate description thereof will not be given herein.

The modification relation analysis unit 820, based on sentence structure information of an input sentence, may analyze a modification relation for the sentence. Referring to the configuration example of FIG. 10, the modification relation analysis unit 820 may include a modification relation search priority setting module 822 (hereinafter referred to as 'search priority setting module'), a modification relation search module 824, and a modification relation candidate generation module 826.

Referring to FIG. 11 together, the search priority setting module 822 may measure a depth of each node included in a sentence structure information 1100. For example, a depth of a top node ('remarkable') included in the sentence structure information 1100 may correspond to 0, and a depth of a lowest node ('the') may correspond to 8.

The search priority setting module 822 may set a priority for searching a modification relation of each node based on measured depth values. In more detail, the search priority setting module 822 may set a highest priority for a node with a largest measured depth value, and in this case, in the sentence structure information 1100 of FIG. 11, a lowest node ('the') with a depth value of '8' may have a highest priority.

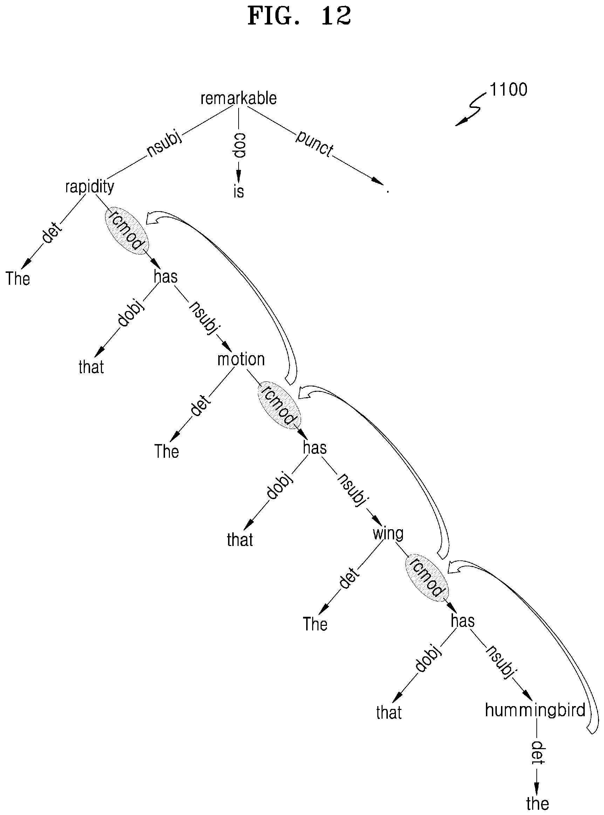

Referring to FIGS. 10 and 12, the modification relation search module 824 may search a modification relation for each of nodes and edges included in the sentence structure information 1100 according to a search priority set by the search priority setting module 822. When the search priority set above is set based on a depth of a node, the modification relation search module 824 may search a modification relation for each of the nodes and edges in reverse order from the lowest node to the highest node.

In more detail, the modification relation may be determined based on a dependency relation (dependency relation tag) of an edge (e.g., it can be an edge connected to an upper part of each node, but not necessarily) connected to each node. In more detail, the modification relation search module 824 may detect at least one edge having a dependency relation tag corresponding to the modification relation. For example, the dependency relation tag corresponding to the modification relation may correspond to rcmod (relative clause modifier), infmod (infinitive modifier), partmod (participle modifier), prep (prepositional phrase), conj (coordinating conjunction), xcomp (subordinate clause), and nsubj (noun phrase) from among dependency relation tags described in Table 1, but is not limited thereto.

When at least one edge having a dependency relation tag corresponding to the modification relation is detected, the modification relation search module 824 may obtain a search result including information about the at least one detected edge and provide the search result to the modification relation candidate generation module 826.

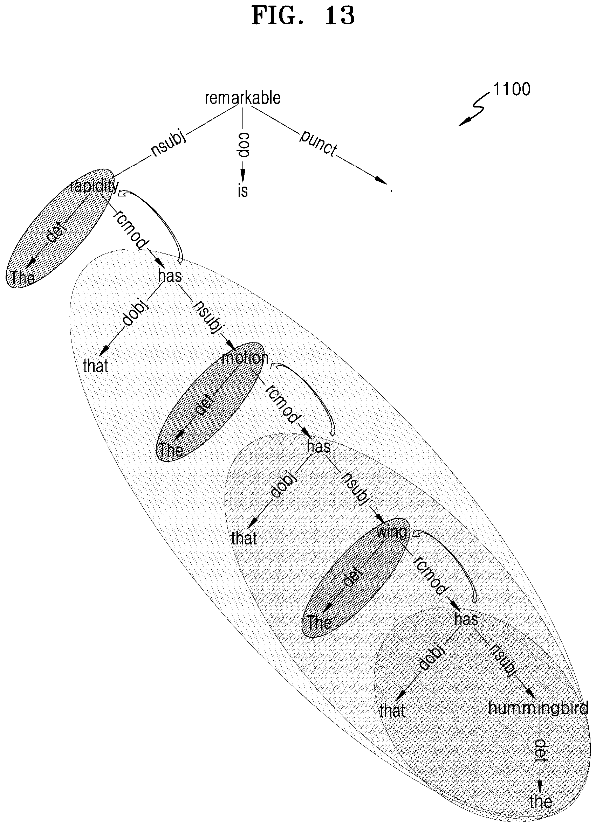

Referring to FIGS. 10 and 13, the modification relation candidate generation module 826 may generate at least one modification relation candidate for the sentence structure information 1100 based on the search result provided from the modification relation search module 824.

In more detail, the modification relation candidate generation module 826 may determine, for each of at least one edge included in the search result, a word, phrase, or clause corresponding to a lower node of the edge as a modifier (or a modifier phrase or modifier clause), and determine an upper node connected to the edge as a modified word (or a modified phrase or antecedent phrase). The modification relation candidate generation module 826 may generate at least one modification relation candidate including the modifier (modifier phrase or modifier clause) and the modified word (modified phrase or antecedent phrase), and the number of modification relation candidates may be equal to the number of edges included in the search result.

According to an embodiment, the prep, conj, xcomp, and nsubj described above may be determined as dependency relation tags corresponding to a modification relation in the top node with depth 0, and a word, phrase, or word phrase connected to an edge having a corresponding dependency relation tag may not correspond to a modifier or a modified word, but may be generated as a modification relation candidate.

Referring back to FIG. 9, the modification relation analysis unit 820 may provide a modification relation analysis result including the at least one modification relation candidate to the modification relation output unit 830. The modification relation output unit 830 may provide the modification relation analysis result provided by the modification relation analysis unit 820 to the user terminal 20, a system (machine translation, query response, information retrieval, etc.) providing a language analysis/processing related service, or an artificial intelligence-based language analysis/processing related model, or may output the modification relation analysis result through an output device (a display, etc.) included in the modification relation analysis system 800.

According to an embodiment, the modification relation output unit 830 may display the modification relation analysis result on an input sentence. In addition, the modification relation output unit 830 may sequentially display the at least one modification relation candidate included in the modification relation analysis result based on a depth of a node corresponding to a modified word (or a modified phrase or antecedent phrase).

Referring to an embodiment of FIG. 14, when the above modification relation analysis result is provided to the user terminal 20, the modification relation output unit 830 may display each modification relation candidate on a sentence based on a user input. For example, the modification relation output unit 830 may transmit related data so that a sentence 1410 in which any one modification relation candidate is displayed is output from the user terminal 20.

According to an embodiment, when a user wants to check a previous modification relation candidate of the currently displayed modification relation candidate through the user terminal 20, the user may input a request to output the previous modification relation candidate. The previous modification relation candidate may correspond to a modification relation candidate located below the currently displayed modification relation candidate based on sentence structure information. In response to the input output request, the modification relation output unit 830 may transmit related data so that a sentence 1420 in which the previous modification relation candidate is displayed is output through the user terminal 20.

According to an embodiment, when a user wants to check a next modification relation candidate of the currently displayed modification relation candidate through the user terminal 20, the user may input a request to output the next modification relation candidate. The next modification relation candidate may correspond to a modification relation candidate located higher than the currently displayed modification relation candidate based on sentence structure information. In response to the input output request, the modification relation output unit 830 may transmit related data so that a sentence 1430 in which the next modification relation candidate is displayed is output through the user terminal 20.

Accordingly, a user may analyze a sentence more accurately and smoothly by sequentially checking modification relations for a complex sentence in situations such as language learning or document analysis.

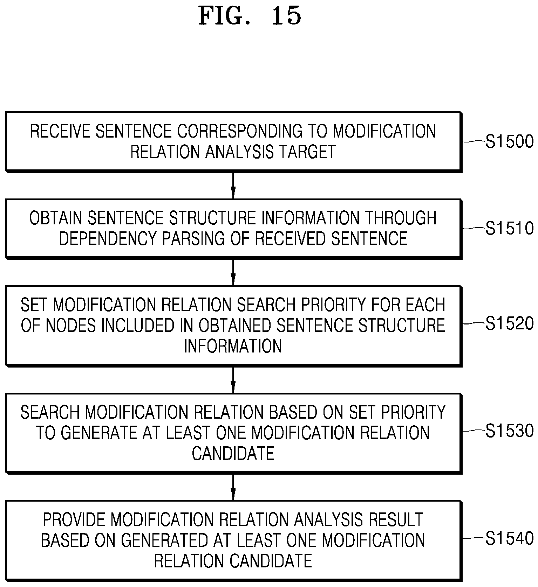

FIG. 15 is a flowchart for explaining a modification relation analysis method as an example of a sentence analysis method according to an embodiment.

Referring to FIG. 15, the modification relation analysis method according to an embodiment may include operation S1500 of receiving a sentence corresponding to a modification relation analysis target, and operation S1510 of obtaining sentence structure information through dependency parsing of the received sentence.

As described above, the modification relation analysis system 800 may receive a sentence corresponding to a modification relation analysis target from the user terminal 20, a system (machine translation, query response, document interpretation/summary, sentiment analysis, information retrieval, etc.) providing a language analysis/processing related service, or an artificial intelligence-based language analysis/processing related model.

The modification relation analysis method may include operation S1520 of setting a modification relation search priority for each of nodes included in the obtained sentence structure information, and operation S1530 of searching for a modification relation for the sentence structure information based on the modification relation set priority to generate at least one modification relation candidate.

The modification relation analysis system 800 may set the search priority based on a depth of each of the nodes, and search modification relations for all nodes and edges from the lowest node to the highest node according to the set search priority. Accordingly, even if a plurality of modification relations are included in a sentence, the modification relation analysis system 800 may detect the modification relations without omission and generate at least one modification relation candidate.

The modification relation analysis method may include operation S1540 of providing a modification relation analysis result for the received sentence based on the generated at least one modification relation candidate.

The modification relation analysis system 800 and the modification relation analysis method according to an embodiment may be applied to various fields such as language education content or language analysis/processing related services (machine translation, query response, document interpretation/summary, sentiment analysis, information retrieval, etc.). When the modification relation analysis system 800 and the modification relation analysis method are provided to the language education content, learners may effectively obtain a method of determining modification relations for a complex sentence by checking and understanding the provided modification relation analysis result. In addition, the modification relation analysis system 800 and the modification relation analysis method may help accurately identify a modification relation for a sentence in fields such as law, medicine, and technical documents where the use of accurate terms and interpretation of content are important. Furthermore, the modification relation analysis system 800 and the modification relation analysis method may support an artificial intelligence model related to language analysis/processing to analyze a sentence more accurately by analyzing and providing a modification relation for a sentence as a kind of data preprocessing for a sentence input to the artificial intelligence model.

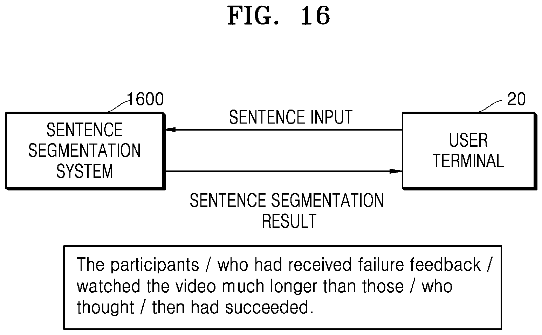

FIG. 16 is a view for a conceptual explanation of a sentence segmentation system according to an embodiment.

Referring to FIG. 16, a sentence segmentation system 1600 may receive a sentence corresponding to a segmentation target, perform constituency parsing on the received sentence, and then provide a segmentation result in which the sentence is segmented based on a result of the parsing. FIG. 16 illustrates a form of receiving a sentence corresponding to a segmentation target from the user terminal 20 including a smart phone, a tablet PC, a desktop PC, a laptop PC, etc., but depending on the embodiment, the sentence may be received from a system (machine translation, query response, document interpretation/summary, sentiment analysis, information retrieval, language training, etc.) providing a language analysis/processing related service or an artificial intelligence-based language analysis/processing related model. Alternatively, the sentence segmentation system 1600 may be included as a component of a system that provides the language analysis/processing related service.

The sentence segmentation system 1600 may be configured to include at least one computing device. In this case, components (modules) included in the sentence segmentation system 1600 may be implemented as hardware, software, or a combination thereof, and may be implemented by being integrated or segmented into the at least one computing device. In addition, the components (modules) included in the sentence segmentation system 1600 may be implemented as a computer-readable storage medium storing at least one program including instructions for performing the constituency parsing method and/or sentence segmentation method described below.

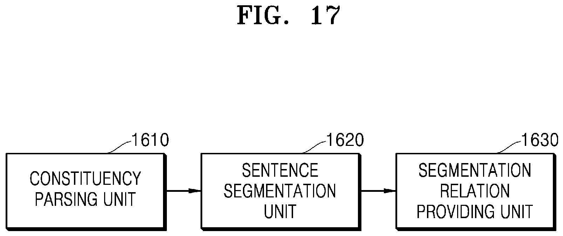

Hereinafter, various embodiments related to an operation of the sentence segmentation system 1600 will be specifically described with reference to FIGS. 17 to 25.

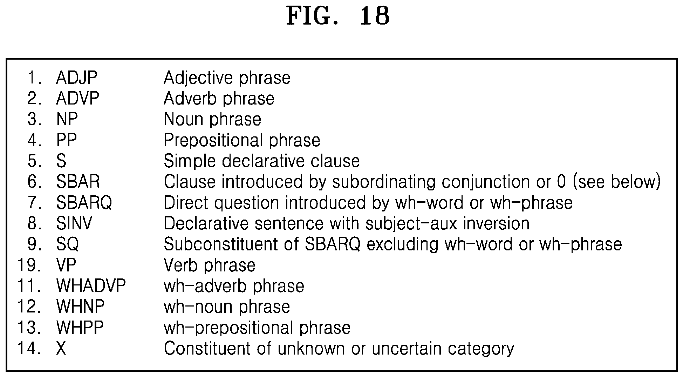

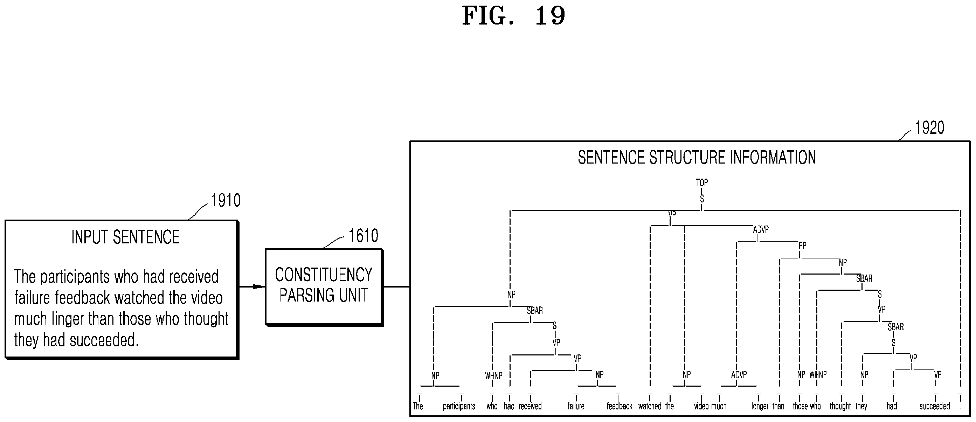

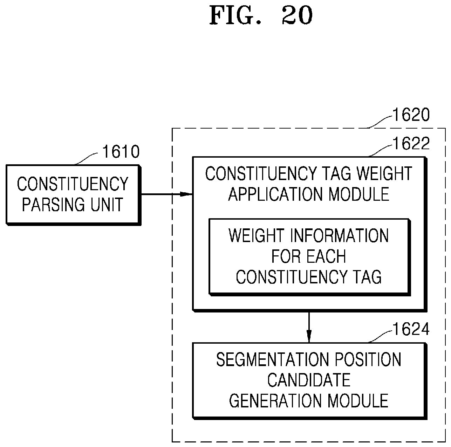

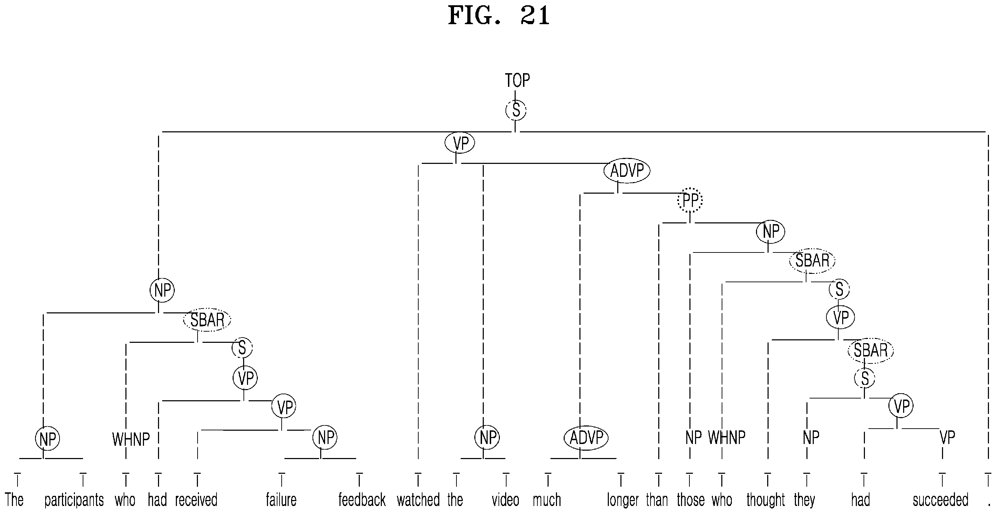

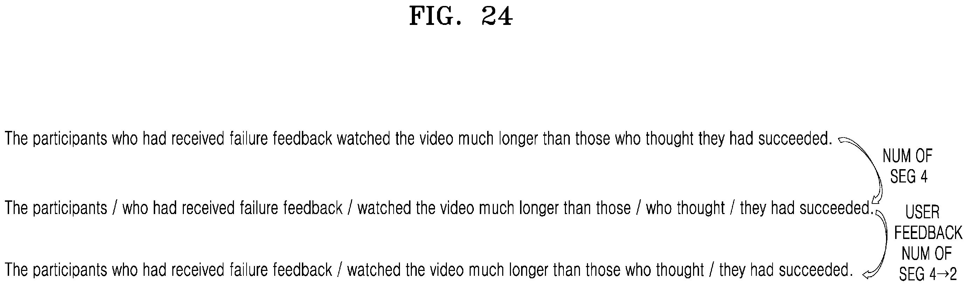

FIG. 17 is a view showing the configuration of a sentence segmentation system according to an embodiment. FIG. 18 is a view showing constituency tags set by a constituency parsing unit. FIG. 19 is an exemplary view for explaining the operation of a constituency parsing unit illustrated in FIG. 17. FIG. 20 is a block diagram showing a configuration example of a sentence segmentation unit illustrated in FIG. 17. FIGS. 21 to 23 are exemplary views for explaining the operation of a sentence segmentation unit according to the configuration example of FIG. 20. FIG. 24 is an exemplary view for explaining the operation of a segmentation result providing unit illustrated in FIG. 17.

Referring to FIG. 17, the sentence segmentation system 1600 may include the constituency parsing unit 1610, a sentence segmentation unit 1620, and a segmentation result providing unit 1630.

When a sentence to be segmented is input from the user terminal 20, a system (machine translation, query response, document interpretation/summary, sentiment analysis, information retrieval, language training, etc.) providing a language analysis/processing related service, or an artificial intelligence-based language analysis/processing related model, the constituency parsing unit 1610 may perform constituency parsing on the input sentence to obtain sentence structure information.

The constituency parsing is one of methods of analyzing a grammatical structure of a sentence, and may mean a process of decomposing a sentence into constituents (phrases or clauses) and generating sentence structure information that represents a hierarchical relation between them.

For example, the sentence structure information may express the hierarchical relation between the constituents of the sentence in the form of a tree structure. In this case, each node in the sentence structure information may include a constituency tag that represents a grammatical constituent, and a leaf node may include words in the sentence. FIG. 18 shows an example of a constituency tag set to each node according to constituency parsing of a sentence by the constituency parsing unit 1610, and FIG. 19 is an exemplary view showing sentence structure information 1920 generated according to a constituency parsing result for an input sentence 1910, 'The participants who had received failure feedback watched the video much longer than those who thought they had succeeded."

The constituency parsing unit 1610 may perform constituency parsing on the input sentence 1910 through various methods such as a rule-based analysis method or a neural network-based analysis method to obtain the sentence structure information 1920. The rule-based analysis method may manually define grammar rules and analyze a structure of the input sentence 1910 through pattern matching according to the defined grammar rules. The neural network-based analysis method may refer to a method of obtaining the sentence structure information 1920 from the input sentence 1910 using a deep learning model. The deep learning model may be trained using large corpus data, and may predict the most probable sentence structure by learning the probability distribution of a sentence structure.

Referring to FIG. 17 again, the sentence segmentation unit 1620 may perform sentence segmentation based on the sentence structure information of the input sentence. Referring to the configuration example of FIG. 20, the sentence segmentation unit 1620 may include a constituency tag weight application module 1622 and a segmentation position candidate generation module 1624.

The constituency tag weight application module 1622 and the segmentation position candidate generation module 1624 will be described with reference to FIGS. 21 to 23 together.

The constituency tag weight application module 1622 may apply a weight related to sentence segmentation to each node based on weight information for each constituency tag, which indicates a weight set for each constituency tag, and a constituency tag of each node included in the sentence structure information 1920. The weight of each constituency tag included in the weight information for each constituency tag may be changed in various ways according to weight adjustment information such as user input or segmentation conditions received through another computing device. In the embodiments of FIGS. 21 to 23, it is assumed that a weight of 100 is set for constituency tag SBAR corresponding to a subordinate clause, a weight of 40 is set for constituency tag S corresponding to a declarative clause, a weight of 15 is given to constituency tag PP corresponding to a prepositional phrase and constituency tag ADJP corresponding to an adjective phrase, and a weight of 1 is given to the rest.

The segmentation position candidate generation module 1624 may generate at least one segmentation position candidate for a sentence based on a weight applied to each node. Each of the at least one segmentation position candidate may correspond to a blank area between words in the sentence.

In more detail, the segmentation position candidate generation module 1624 may apply the weight applied to each node to a left blank area of a first word of each node and a right blank area of a last word. For example, referring to a left node with constituency tag SBAR, it can be seen that that a first word of the node is 'who' and a last word is 'feedback.' In this case, a weight of 100 allocated to the node may be applied to a left blank area of 'who' and a right blank area of 'feedback' respectively. In this way, when respective weights applied to nodes are applied to blank areas, the segmentation position candidate generation module 1624 may sum at least one of the applied weights for each of the blank areas.

The segmentation position candidate generation module 1624 may generate at least one segmentation position candidate based on the weights summed for each of the blank areas. In more detail, the segmentation position candidate generation module 1624 may set a segmentation priority for each of the blank areas based on the summed weights, and may generate at least one segmentation position candidate based on the set segmentation priority and the number of segmentations (a preset value or received from another computing device).

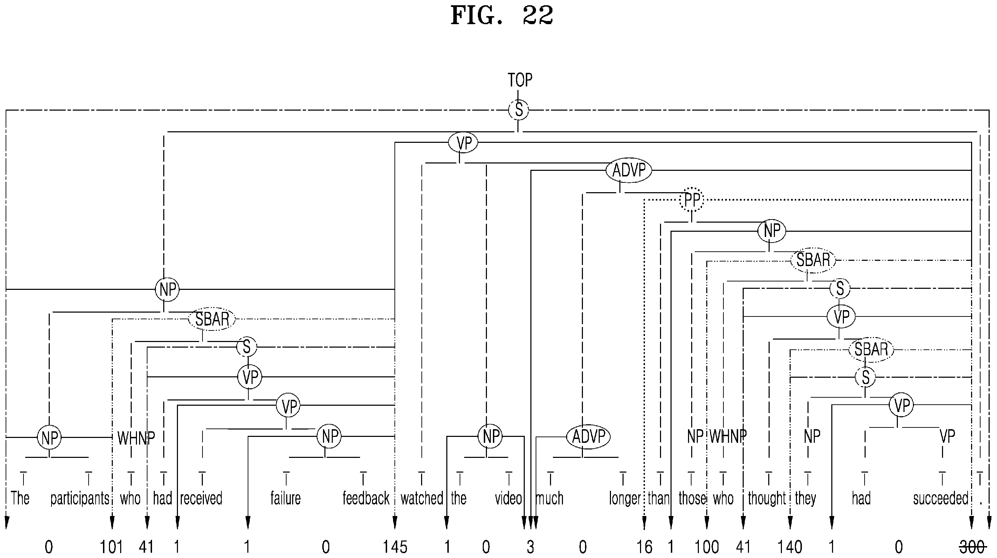

For example, the segmentation position candidate generation module 1624 may set a higher segmentation priority for a corresponding blank area as the summed weights increase. According to an embodiment, the segmentation position candidate generation module 1624 may ignore a weight for a left blank area of a first word in a sentence and a weight for a right blank area of a last word, thereby excluding those blank areas when setting a segmentation priority. In the exemplary view of FIG. 22, because a weight for a blank area between 'feedback' and 'watched' is the highest, the segmentation position candidate generation module 1624 may set a highest segmentation priority for the blank area.

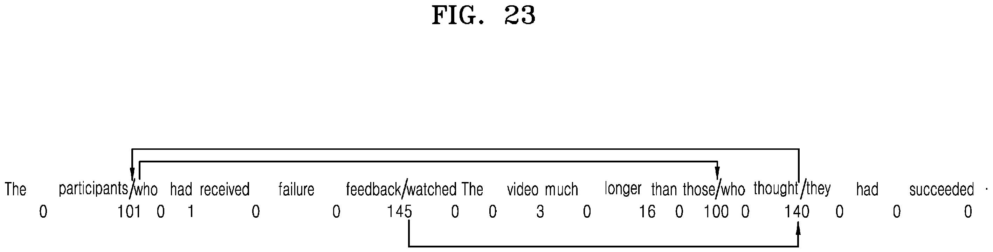

According to an embodiment, in order to prevent blank areas that are consecutive to the left or right from appearing as segmentation position candidates, the segmentation position candidate generation module 1624 may sequentially adjust weights for blank areas on both adjacent sides (e.g., adjust weights to 0 or reduce weights to a predefined value), starting from a blank area with a highest segmentation priority, so that the blank areas are not included in the segmentation position candidates. Referring to the embodiment of FIG. 23, the segmentation position candidate generation module 1624 may set a highest segmentation priority for a first blank area between 'feedback' and 'watched', adjust a weight for a blank area between 'failure' and 'feedback', which is a left blank area of the first blank area, to 0, and adjust a weight for a blank area between 'watched' and 'the', which is a right blank area of the first blank area, to 0. Next, the segmentation position candidate generation module 1624 may set a second highest segmentation priority for a second blank area between 'thought' and 'they', which has a next highest weight after a weight of the first blank area, and adjust a weight of each of a blank area between 'who' and 'thought', which is a left blank area of the second blank area, and a blank area between 'they' and 'had', which is a right blank area of the second blank area, to 0.

In this manner, the segmentation position candidate generation module 1624 may set segmentation priorities for blank areas, and generate a segmentation position candidate according to the set segmentation priorities. For example, when a set number of segments is '4', the segmentation position candidate generation module 1624 may generate the first blank area and the second blank area, a third blank area between 'participants' and 'who', and a fourth blank area between 'those' and 'who' as segmentation position candidates.

Referring again to FIG. 17, the sentence segmentation unit 1620 may provide a result of the constituency parsing including at least one of the segmentation position candidates to the segmentation result providing unit 1630. The segmentation result providing unit 1630 may provide a sentence segmentation result based on the result of the constituency parsing to the user terminal 20, a system (machine translation, query response, information retrieval, etc.) providing a language analysis/processing related service, or an artificial intelligence-based language analysis/processing related model, or may output the sentence segmentation result through an output device (a display, etc.) included in the sentence segmentation system 1600.

According to an embodiment, the segmentation result providing unit 1630 may provide the sentence segmentation result in a form in which each of the at least one segmentation position candidates is displayed on the sentence. In addition, the segmentation result providing unit 1630 may also provide the sentence segmentation result in a form in which the at least one segmentation position candidate is sequentially displayed according to a set segmentation priority.

Referring to the embodiment of FIG. 24, when the sentence segmentation result is provided to the user terminal 20, the segmentation result providing unit 1630 may change (increase or decrease) the number of segmentation position candidates displayed on the sentence in response to a request for changing the number of segmentation position candidates received from the user terminal 20.

Accordingly, a user may confirm a segmentation position of a complex sentence in situations such as language learning or document interpretation to understand the content of the sentence more accurately.

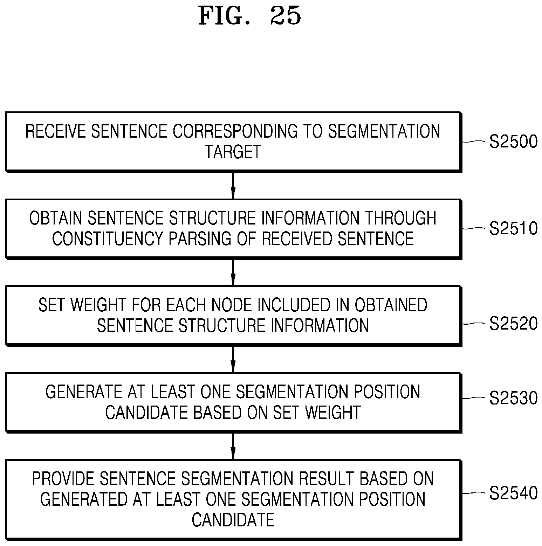

FIG. 25 is a flowchart for explaining a sentence segmentation method as an example of a sentence analysis method according to an embodiment.

Referring to FIG. 25, the sentence segmentation method according to an embodiment may include operation S2500 of receiving a sentence corresponding to a segmentation target, and operation S2510 of obtaining sentence structure information through constituency parsing of the received sentence.

As described above, the sentence segmentation system 1600 may receive a sentence corresponding to a segmentation target from the user terminal 20, a system (machine translation, query response, document interpretation/summary, sentiment analysis, information retrieval, etc.) providing a language analysis/processing related service, or another computing device such as an artificial intelligence-based language analysis/processing related model.

The sentence segmentation method may include operation S2520 of setting a weight for each node included in the obtained sentence structure information and operation S2530 of generating at least one segmentation position candidate based on the set weight.

The sentence segmentation method may include operation S2540 of providing a sentence segmentation result based on the generated at least one segmentation position candidate.

The sentence segmentation system 1600 and the sentence segmentation method according to an embodiment may be applied to various fields such as language education content or language analysis/processing related services (machine translation, query response, document interpretation/summary, sentiment analysis, information retrieval, etc.). When the sentence segmentation system 1600 and the sentence segmentation method are provided to the language education content, learners may effectively obtain a method of interpreting a complex sentence by checking and understanding the provided sentence segmentation result. In addition, the sentence segmentation system 1600 and the sentence segmentation method may help accurately understand the meaning of a sentence in fields such as law, medicine, and technical documents where the use of accurate terms and interpretation of content are important. In addition, the sentence segmentation system 1600 and the sentence segmentation method may support an artificial intelligence model related to language analysis/processing to analyze a sentence more accurately by analyzing and providing an appropriate segmentation position according to a constituency structure of a sentence as a kind of data preprocessing for a sentence input to the artificial intelligence model.

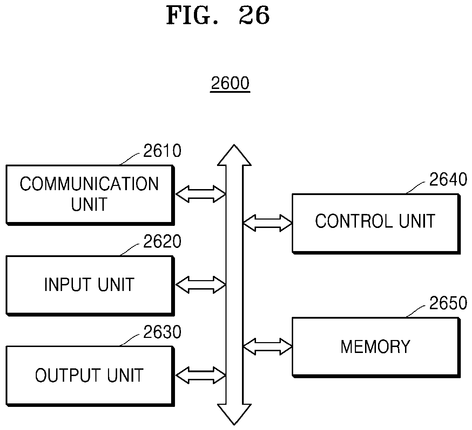

FIG. 26 is a schematic hardware configuration block diagram of a computing device configuring a sentence analysis system according to an embodiment.

A hardware configuration of a computing device 2600 illustrated in FIG. 26 may correspond to a hardware configuration of at least one computing device constituting the sentence analysis systems (sentence search system, modification relation analysis system, and/or sentence segmentation system) described above.

Referring to FIG. 26, the computing device 2600 may include a communication unit 2610, an input unit 2620, an output unit 2630, a control unit 2640, and a memory 2650. The control configuration illustrated in FIG. 26 is an example for convenience of explanation, and the computing device 2600 may include more or less configurations than the configuration illustrated in FIG. 26.

The communication unit 2610 may include one or more communication modules that enable communication with other terminals or servers by connecting the computing device 2600 to a network. For example, the communication module may include a mobile communication module such as LTE, 5G, etc., a wireless communication module such as Wi-Fi, and/or various other wired or wireless communication modules.

The input unit 2620 is a configuration for obtaining information such as user input, images, and audio, and may include various input devices such as various mechanical/electronic input devices, cameras, and microphones. The output unit 2630 is intended to provide information to a user by generating output related to sight, hearing, or touch, and may include a display, speaker, vibration module, etc.

The control unit 2640 may control all operations of the computing device 2600. The control unit 2640 may process signals, data, and information input or output through the components described above, or may provide certain information or functions according to various applications or algorithms stored in the memory 2650. For example, the control unit 2640 may control all processes related to the sentence analysis methods (the sentence search method, modification relation analysis method, and/or sentence segmentation method) disclosed in this specification.

The control unit 2640 may include at least one processor, and/or at least one programmable circuit. For example, the control unit 2640 may be implemented as hardware such as a central processing unit (CPU), an application processor (AP), a micro controller unit (MCU), a graphic processing unit (GPU), a neural processing unit (NPU), an integrated circuit, an application-specific integrated circuit (ASIC), a field programmable gate array (FPGA), etc.

The memory 2650 may store programs and data required for the operations of the computing device 2600. In addition, the memory 2650 may store data generated or obtained through the control unit 2640. The memory 2650 may be composed of a storage medium such as read-only memory (ROM), random-access memory (RAM), flash memory, solid state disk (SSD), or hard disk drive (HDD), or a combination of storage media.

The embodiments described above may be implemented as computer-readable code on a program-recorded medium. The non-transitory computer-readable medium includes all types of recording devices that store data that can be read by a computer system. Examples of the non-transitory computer-readable medium include HDD, SSD, silicon disk drive (SDD), ROM, RAM, compact disc-read only memory (CD-ROM), magnetic tape, floppy disk, optical data storage device, etc.

According to the inventive concept, a grammar structure-based similar sentence search method according to grammar structure information obtained from a grammar input from a user terminal, etc. or grammar structure information directly input from a user terminal, etc. is implemented, so that similar sentences having the same or similar structure may be searched for more accurately.

In addition, when sentence search by a sentence analysis method according to the inventive concept is applied to language education content, the convenience of easily obtaining and producing various grammar examples for grammar learning may be provided to content providers, and high leaming efficiency may be provided by allowing learners to easily obtain various examples having a grammar structure they want to learn.

The sentence analysis method according to the inventive concept may search modification relations for all nodes and edges from a lowest node to a highest node based on sentence structure information obtained according to a dependency parsing result for a sentence. Accordingly, even if a sentence structure is complex and includes a large number of modification relations, each modification relation may be accurately detected and provided without omission.

The sentence analysis method according to the inventive concept may provide optimal segmentation results that meet the needs of users, etc. by adjusting respective weights for constituency tags according to a segmentation purpose, such as emphasizing a specific grammatical element in a sentence, and providing segmentation position candidates for the sentence according to the adjusted weights.

In addition, the sentence analysis system and the sentence analysis method may be applied to various fields such as language education content or language analysis/processing related services (machine translation, query response, document interpretation/summary, sentiment analysis, information retrieval, etc.).

Furthermore, the sentence analysis system and the sentence analysis method may help accurately identify a modification relation of a sentence in fields such as law, medicine, and technical documents where the use of accurate terms and interpretation of content are important.

Moreover, the sentence analysis system and the sentence analysis method may support an artificial intelligence model related to language analysis/processing to analyze a sentence more accurately by analyzing and providing a sentence structure as a kind of data preprocessing for a sentence input to the artificial intelligence model.

Effects obtainable by the inventive concept are not limited to the effects described above, and other effects not described herein may be clearly understood by one of ordinary skill in the art to which the disclosure belongs from the above description.

While the disclosure has been particularly shown and described with reference to embodiments thereof, it will be understood that various changes in form and details may be made therein without departing from the spirit and scope of the following claims.

In addition, it will be apparent to one of ordinary skill in the art that various changes and modifications are possible within a range that does not deviate from the basic principles of the disclosure.

## Claims

1. A system comprising:
a communication interface connected to another computing device and receiving an input related to information about a grammar to be searched; and
at least one processor configured to:
obtain a query including information about the grammar to be searched based on the received input;
compare grammar structure information corresponding to the grammar included in the obtained query with sentence structure information of each sentence stored in a database; and
obtain a search result including at least one sentence having the grammar structure information according to a comparison result,
wherein the grammar structure information and the sentence structure information comprise structure information based on dependency parsing.

2. The system of claim 1, wherein the at least one processor is configured to:
provide a first interface for selecting one of a plurality of preset grammars to the other computing device through the communication unit; and
receive an input for selecting one of the plurality of grammars through the communication unit based on the first interface.

3. The system of claim 1 or 2, wherein the at least one processor is configured to:
obtain grammar structure information through dependency parsing for the selected grammar; or
obtain grammar structure information corresponding to the selected grammar from grammar structure information corresponding to each of the plurality of grammars stored in a database or memory.

4. The system of any one of claims 1 to 3, wherein the at least one processor is configured to:
provide a second interface for inputting grammar structure information corresponding to the grammar to be searched to the other computing device through the communication unit; and
receive the grammar structure information through the communication unit based on the second interface.

5. The system of any one of claims 1 to 4, wherein the grammar structure information comprises a dependency tree corresponding to a dependency parsing result, and
the at least one processor receives the grammar structure information including a value of each of a plurality of nodes constituting the dependency tree, and a value of each of at least one edge connecting two different nodes from among the plurality of nodes through the second interface.

6. The system of any one of claims 1 to 5, wherein the at least one processor is configured to:
analyze whether the sentence structure information of each of the sentences stored in the database comprises a same structure as that of grammar structure information corresponding to the grammar to be searched; and
obtain the comparison result including pair data of at least one sentence-sentence structure information analyzed as including a same structure as that of the grammar structure information.

7. The system of any one of claims 1 to 6, wherein the at least one processor is configured to:
analyze whether the sentence structure information of each of the sentences comprises the same structure as that of the grammar structure information corresponding to the grammar to be searched based on an identity of respective words or parts of speech of nodes included in the grammar structure information, an identity of edges between the nodes, and an identity of respective dependency relation tags corresponding to the edges.

8. A system comprising:
a communication interface receiving a sentence corresponding to a modification relation analysis target from another computing device connected thereto through a network; and
at least one processor configured to:
obtain sentence structure information through dependency parsing of the received sentence, wherein the sentence structure information comprises nodes corresponding to words included in the sentence and edges connecting two nodes having a dependency relation from among the plurality of nodes;
set a search priority for searching a modification relation for each of the nodes included in the sentence structure information based on the obtained sentence structure information;
search the modification relation based on the set search priority; and
provide a modification relation analysis result for the sentence based on a search result.

9. The system of claim 8, wherein the at least one processor is configured to:
measure a depth of each of the nodes included in the sentence structure information; and
set a search priority for each of the nodes based on the measured depth.

10. The system of claim 8 or 9, wherein the at least one processor is configured to:
detect at least one edge having a dependency relation tag corresponding to a modification relation based on a dependency relation tag of each edge included in the sentence structure information, thereby searching the modification relation.

11. The system of any one of claims 8 to 10, wherein the at least one processor is configured to:
determine, for each of the detected at least one edge, a word, phrase or word phrase corresponding to at least one node located below the edge as a modifier, a modifier phrase or a modifier clause;
determine an upper node connected to the edge as a modified word; and
generate at least one modification relation candidate including the modifier, modifier phrase or modifier clause, and the modified word for the edge.

12. The system of any one of claims 8 to 11, wherein the at least one processor is configured to:
provide the modification relation analysis result indicating the at least one modification relation candidate on the sentence.

13. The system of any one of claims 8 to 12, wherein the at least one processor is configured to:
provide the modification relation analysis result indicating a first modification relation candidate from among the at least one modification relation candidates on the sentence;
receive, from the other computing device, a request for outputting a previous modification relation candidate of the first modification relation candidate; and,
in response to the request for outputting the previous modification relation candidate, provide a second modification relation candidate having a modified word located at a lower node than a modified word of the first modification relation candidate by displaying the second modification relation candidate in the modification relation analysis result.

14. The system of any one of claims 8 to 13, wherein the at least one processor is configured to:
receive, from the other computing device, a request for outputting a next modification relation candidate of the first modification relation candidate; and,
in response to the request for outputting the next modification relation candidate, provide a third modification relation candidate having a modified word located at a higher node than the modified word of the first modification relation candidate by displaying the third modification relation candidate in the modification relation analysis result.

15. A system comprising:
a communication interface receiving a sentence corresponding to a segmentation target from another computing device connected thereto through a network; and
at least one processor configured to:
obtain sentence structure information through constituency parsing of the received sentence, wherein the sentence structure information expresses a hierarchical relation between constituents of the sentence, and comprises a plurality of nodes each of which has a constituency tag set to represent a grammatical constituent;
set a weight to each of the plurality of nodes based on the constituency tag set to each of the plurality of nodes;
generate at least one segmentation position candidate for the sentence based on the set weight; and
generate a sentence segmentation result based on the generated at least one segmentation position candidate.
